# EUROPEAN PATENT APPLICATION

(11) **EP 1 607 131 A1**
(43) Date of publication of application: **21.12.2005**
(21) Application number: 04722038.9
(22) Date of filing: 19.03.2004
(51) Int. Cl.: B01D 39/20, B01D 46/00

(54) **CERAMIC FILTER**

(30) Priority: 24.03.2003 JP 2003079315; 08.03.2004 JP 2004063327
(71) Applicant: NGK INSULATORS, LTD., Nagoya-shi, Aichi 467-8530 (JP)
(72) Inventor: YAMADA, Tomohiro, NGK INSULATORS, LTD., Nagoya-shi, Aichi 467-8530 (JP)
(74) Representative: TBK-Patent
(86) International application number: PCT/JP2004/003714
(87) International publication number: WO 2004/085028

(57) **Abstract**

A ceramic filter (1), comprising a porous body (2) and filtration membranes (5), wherein the cross section shapes of a plurality of main flow passages (3) in a direction perpendicular to the flow direction of fluid to be purified or purified fluid are aligned in rows with a specified pattern and the cross section shape of a specific partition wall part (18) in the direction perpendicular to the flow direction of the fluid to be purified or the purified fluid is so formed as to be encompassed by a shape defined by two parallel lines apart at a specified distance from each other. The cross section shape of a first specific main flow (3a) in the direction perpendicular to the flow direction of the fluid to be purified or the purified fluid is formed in a polygon of a heptagon or more arranged in a specified state, θ₁, θ₂, θ₃, and θ₄ are within the range of 110 to 160°, and A and B satisfy the requirement of 0.3B ≤ A ≤ 0.7B. Thus, a yield can be increased without causing a defect such as a crack in the filtration membranes.

## Description

### Technical Field

The present invention relates to a ceramic filter for use in filtering a fluid such as a liquid or a gas, more particularly to a ceramic filter in which a yield is increased without causing a defect such as a crack in a filtration membrane.

### Background Art

A ceramic filter is useful as a filter for solid-liquid separation in that the filter is superior in physical strength and durability, and is highly reliable as compared with a polymer membrane or the like, and is also superior in resistance to corrosion. Furthermore, the precise control of pore diameters which determine a filtering ability becomes possible.

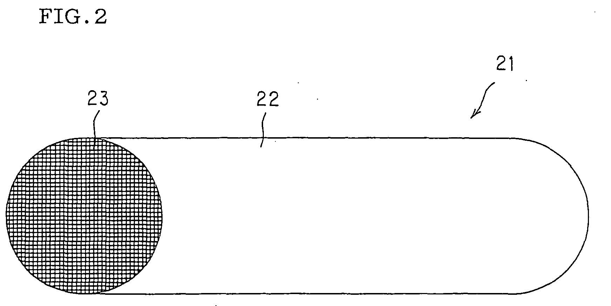

The ceramic filter performs filtration using as a filtering material a ceramic porous body processed into a variety of the shape such as a flat plate shape, a tubular shape or the like. A so-called monolithic ceramic filter 21 is broadly utilized in which, as shown in FIG. 2, a porous body 22 made of a ceramic is provided with a large number of flow passages (cells) 23 of a stock solution (fluid to be purified), because a filtering area per unit volume is large, and a filtering ability is high.

When the monolithic ceramic filter is used, the only porous body constituting a substrate is used as the filtering material. Alternatively, from a viewpoint that a filtering performance is enhanced while securing a water passing amount, ceramic filtration membranes (hereinafter referred to simply as the "filtration membranes") are formed on inner wall surfaces of the flow passages (cells). The filtration membranes have smaller pore diameters as compared with those of pores in the porous body constituting the substrate.

As to the cell (main flow passage) for this ceramic filter, a quadrangular cell is generally used as a shape (cell shape) of a cross section perpendicular to a flow direction of the fluid to be purified, because the filtering area per unit volume can be increased. However, to facilitate counter flow washing, it is assumed that a preferable cell is a polygonal cell such as a pentagonal cell or more (e.g., hexagonal cell or the like), or a cell which does not have any corner portion, such as a circular cell.

The ceramic filter is a kind of honeycomb structure, and can therefore be manufactured by a method similar to that for another honeycomb structure, in which clay of materials for forming the honeycomb structure is extruded, dried, and thereafter fired. However, the above-described cells like the polygonal cell and the circular cell have low strengths against a force from a direction crossing the flow direction at right angles, and therefore have had a problem that the cell or the ceramic filter itself is easily crushed and deformed by a weight of an extruded material or an external force such as vibration generated in an extruding step or a subsequent step (firing step, etc.).

To avoid this problem, as a related conventional technique, there is described a ceramic filter in which a cell wall linearly crossing the substrate (porous body) is formed between at least a set of cell rows disposed in the vicinity of each other, so that the counter flow washing is facilitated, and a disadvantage like the deformation by the weight or the external force or the like is prevented from being generated at a manufacturing time (see, e.g., JP-A-2000-342920).

However, even in the ceramic filter described in the JP-A-2000-342920, a defect is sometimes generated such as a crack in the filtration membrane formed in a corner portion of the cell inner wall surface. Therefore, there has been a demand for development of a ceramic filter in which the generation of such membrane defect is inhibited, and a manufacturing yield is increased.

The present invention has been developed in view of the problem of the conventional technique, and an object thereof is to provide a ceramic filter in which a yield is increased without causing a defect such as a crack in filtration membranes.

### Disclosure of the Invention

That is, according to the present invention, there is provided a ceramic filter comprising: a porous body having two end surfaces and an outer peripheral surface and having a plurality of main flow passages for a fluid to be purified which penetrate from one end surface to other end surface and which are partitioned from one another via partition walls; and filtration membranes provided on inner wall surfaces of the main flow passages, the fluid to be purified that flows into the filter from opening portions in one end surface of the main flow passage being allowed to permeate the filtration membranes and an inside of the porous body to be thereby purified, the fluid being then taken out as a purified fluid from the outer peripheral surface of the porous body, or the fluid to be purified that flows into the filter from the outer peripheral surface of the porous body being allowed to permeate the inside of the porous body and the filtration membranes to be thereby purified, the fluid being then taken out as a purified fluid from at least opening portions in one end surface of the main flow passage, wherein cross section shapes of the plurality of main flow passages, in a direction perpendicular to a flow direction of the fluid to be purified or the purified fluid, are aligned in rows with a predetermined pattern, a specific partition wall part, among the partition walls, is positioned between the rows of predetermined main flow passages (first specific main flow passages) disposed in the vicinity of each other, the cross section shape of the specific partition wall part, in the direction perpendicular to the flow direction of the fluid to be purified or the purified fluid, is so formed as to be encompassed by a shape defined by two parallel lines apart at a specified distance from each other, the cross section shapes of the first specific main flow passages, in the direction perpendicular to the flow direction of the fluid to be purified or the purified fluid, are formed into polygonal shapes equivalent or superior to heptagonal shapes arranged so that predetermined sides (reference sides) facing each other via the specific partition wall part constitute the two parallel lines, and assuming that sides crossing opposite ends of the reference side are second and third sides, a side crossing an end of the second side opposite to the reference side is a fourth side, and a side crossing an end of the third side opposite to the reference side is a fifth side, θ₁, θ₂, θ₃, and θ₄ (wherein the θ₁, θ₂, θ₃, and θ₄ indicate an angle (θ₁) formed by the reference side and the second side, an angle (θ₂) formed by the reference side and the third side, an angle (θ₃) formed by the second and fourth sides, and an angle (θ₄) formed by the third and fifth sides, respectively) are within a range of 110 to 160°, and a length (A) of the reference side and a maximum distance (B) between the fourth and fifth sides satisfy a requirement of 0.3B ≤ A ≤ 0.7B.

In the present invention, there are preferably provided two or more sets of parallel lines, each set comprising two parallel lines.

Moreover, in the present invention, the cross section of the porous body, in the direction perpendicular to the flow direction of the fluid to be purified or the purified fluid, has a maximum diameter of 70 mmφ or more.

Preferably in the present invention, the specific partition wall part is provided with rows of predetermined main flow passages (second specific main flow passages) whose opposite end-surface openings are plugged, slit-like auxiliary flow passages are formed in portions including the outer peripheral surface of the porous body so that the second specific main flow passages communicate with an external space, the fluid to be purified that flows into the filter from the opening portions in the one end surface of the main flow passage is allowed to permeate the filtration membranes and the inside of the porous body to be thereby purified, and the fluid is taken out as the purified fluid from the outer peripheral surface of the porous body and outlets of the auxiliary flow passages, or the fluid to be purified that flows into the filter from the outer peripheral surface of the porous body and the outlets of the auxiliary flow passages is allowed to permeate the inside of the porous body and the filtration membranes to be thereby purified, and the fluid is taken out as the purified fluid from at least the opening portions in the one end surface of the main flow passage.

Moreover, in the present invention, an arrangement pattern of cross section shapes of the rows of second specific main flow passages and the rows of main flow passages other than the second specific main flow passages, in the direction perpendicular to the flow direction of the fluid to be purified or the purified fluid, is a repeated pattern including two to eight rows of main flow passages other than the second specific main flow passages, which are arranged subsequently to one row of second specific main flow passages.

### Brief Description of the Drawings

FIGS. 1(a) to 1(c) are diagrams showing one embodiment of a ceramic filter of the present invention, FIG. 1(a) is a perspective view, FIG. 1(b) is an enlarged view of a part P of FIG. 1(a), and FIG. 1(c) is an enlarged view of a first specific main flow passage;
FIG. 2 is a perspective view showing one example of a conventional ceramic filter;
FIG. 3 is a schematic diagram showing another embodiment of the ceramic filter of the present invention; and
FIG. 4 is a schematic diagram showing still another embodiment of the ceramic filter of the present invention;
FIGS. 5(a) to 5(d) are enlarged views showing an arrangement pattern (repeated pattern) of a cross section shape of the ceramic filter of the present invention, perpendicular to a flow direction of a fluid to be purified or a purified fluid;
FIG. 6 is an enlarged view showing an arrangement pattern of cross section shapes of main flow passages in a ceramic filter of Example 1;
FIG. 7 is an enlarged view showing an arrangement pattern of cross section shapes of main flow passages in a ceramic filter of Comparative Example 1; and
FIG. 8 is a schematic diagram showing one example of a high-pressure air bubble tester.

### Best Mode for Carrying out the Invention

A best mode for carrying out the present invention will be described hereinafter, but it should be understood that the present invention is not limited to the following embodiment, but design is appropriately changed or improved otherwise based on ordinary knowledge of a person skilled in the art without departing from the scope of the present invention.

A ceramic filter of the present invention is a ceramic filter comprising: a porous body having two end surfaces and an outer peripheral surface, and having a plurality of main flow passages for a fluid to be purified which penetrate from one end surface to the other end surface and which are partitioned from one another via partition walls; and filtration membranes arranged on inner wall surfaces of the main flow passages. The fluid to be purified that flows into the filter from opening portions in the one end surface of the main flow passage is allowed to permeate the filtration membranes and the inside of the porous body to be thereby purified, and the fluid is then taken out as a purified fluid from the outer peripheral surface of the porous body. Alternatively, the fluid to be purified that flows into the filter from the outer peripheral surface of the porous body is allowed to permeate the inside of the porous body and the filtration membranes to be thereby purified, and the fluid is then taken out as the purified fluid from at least the opening portions in the one end surface of the main flow passage. Cross section shapes (when the "cross section shape" is hereinafter simply referred to, the "cross section shape perpendicular to the flow direction of the fluid to be purified or the purified fluid" is meant) of the plurality of main flow passages in a direction perpendicular to a flow direction of the fluid to be purified or the purified fluid are aligned in rows with a specified pattern. As to the partition walls, a specific partition wall part is positioned between the rows of first specific main flow passages disposed in the vicinity of each other among partition walls, and the cross section shape of the specific partition wall part is so formed as to be encompassed by a shape defined by two parallel lines apart at a specified distance from each other. The cross section shape of the first specific main flow passage is formed into a polygonal shape equivalent or superior to a heptagonal shape arranged so that reference sides facing each other via the specific partition wall part constitute the two parallel lines. Moreover, assuming that sides crossing opposite ends of the reference side are second and third sides, a side crossing an end of the second side opposite to the reference side is a fourth side, and a side crossing an end of the third side opposite to the reference side is a fifth side, θ₁, θ₂, θ₃, and θ₄ (wherein the θ₁, θ₂, θ₃, and θ₄ indicate an angle (θ₁) formed by the reference side and the second side, an angle (θ₂) formed by the reference side and the third side, an angle (θ₃) formed by the second and fourth sides, and an angle (θ₄) formed by the third and fifth sides, respectively) are within a range of 110 to 160°. Furthermore, a length (A) of the reference side and a maximum distance (B) between the fourth and fifth sides satisfy a requirement of 0.3B ≤ A ≤ 0.7B. An embodiment of the present invention will be described hereinafter specifically.

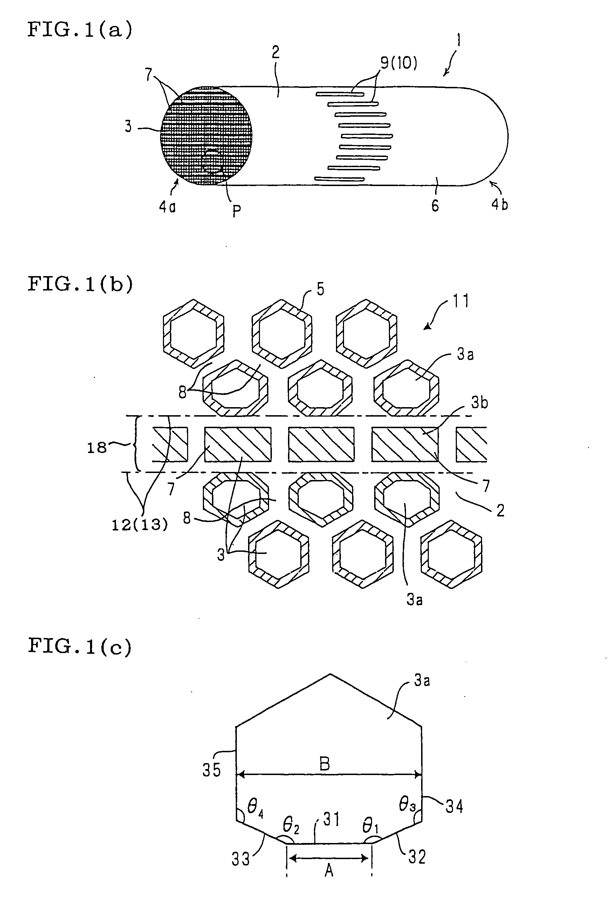

FIGS. 1(a) to 1(c) are diagrams showing one embodiment of a ceramic filter of the present invention, FIG. 1(a) is a perspective view, FIG. 1(b) is an enlarged view of a part P of FIG. 1(a), and FIG. 1(c) is an enlarged view of a first specific main flow passage. A ceramic filter 1 of the present embodiment comprises: a porous body 2 having a plurality of main flow passages 3 which penetrate from one end surface 4a to the other end surface 4b and which are separated from one another via partition walls 8; and filtration membranes 5 arranged on inner wall surfaces of the main flow passages 3. Cross section shapes of the main flow passages 3 are aligned in rows with a predetermined pattern. In portions including an outer peripheral surface 6 of the porous body 2, slit-like auxiliary flow passages 9 are provided so that second specific main flow passages 3b communicate with an external space. It is to be noted that a row of second specific main flow passages 3b is arranged in a specific partition wall part 18. Plugging portions 7 are provided in such a manner as to plug opening portions (FIG. 1(b) shows an only opening part 11 of one end surface) in opposite end surfaces.

There are two types of flows when filtering and purifying a fluid such as a liquid or a gas by use of the ceramic filter 1 shown in FIGS. 1(a) to 1(c) as follows. That is, in the first flow, a fluid to be purified is allowed to flow into the filter from the opening part 11 on the side of one end surface 4a of the main flow passage 3, and is allowed to permeate the filtration membranes 5 and the inside of the porous body 2 to thereby purify the fluid. The fluid is taken out as a purified fluid from the outer peripheral surface 6 of the porous body 2 and outlets 10 of the auxiliary flow passages 9. On the other hand, in the second flow, the fluid to be purified is allowed to flow into the filter from the outer peripheral surface 6 of the porous body 2, and the outlets 10 of the auxiliary flow passages 9, and is allowed to permeate the inside of the porous body 2 and the filtration membranes 5 to thereby purify the fluid. The fluid is taken out as the purified fluid from the opening part 11 on the side of the end surface (one end surface 4a and/or the other end surface 4b) of the main flow passage 3. The ceramic filter of the present embodiment will be described hereinafter in detail mainly in accordance with an example of the first flow. This also applies to a case where the second flow is employed during the purification of the fluid to be purified.

In the ceramic filter 1 of the present embodiment, a cross section shape of a specific partition wall part 18 positioned between adjacent rows of first specific main flow passages 3a is so formed as to be encompassed by a shape defined by two parallel lines apart at a specified distance from each other. When the cross section shape of the specific partition wall part 18 is formed in this manner, a mechanical strength of the ceramic filter can be enhanced regardless of the cross section shape of the main flow passage.

Moreover, in the ceramic filter 1 of the present embodiment, the first specific main flow passages 3a have heptagonal cross section shapes, and are arranged so that two parallel lines are constituted by reference sides 31 of the first specific main flow passages 3a facing each other via the specific partition wall part 18. It is to be noted that the cross section shape of the first specific main flow passage 3a is not limited to the heptagonal shape shown in FIGS. 1(b), 1(c), and may be a polygonal shape equivalent or superior to the heptagonal shape. Furthermore, in the ceramic filter 1 of the present embodiment, as to the cross section shape of the first specific main flow passage 3a, which is a polygonal shape equivalent or superior to the heptagonal, as shown in FIG. 1(c), it is assumed that sides crossing opposite ends of the reference sides 31 are a second side 32 and a third side 33, a side crossing an end of the second side opposite to the reference sides 31 is a fourth side 34, and a side crossing an end of the third side 33 opposite to the reference sides 31 is a fifth side 35. Furthermore, in this case, an angle (θ₁) formed by the reference side 31 and the second side 32, an angle (θ₂) formed by the reference side 31 and the third side 33, an angle (θ₃) formed by the second side 32 and the fourth side 34, and an angle (θ₄) formed by the third side 33 and the fifth side 35 are within a range of 110 to 160°. A length (A) of the reference side 31 and a maximum distance (B) between the fourth side 34 and the fifth side 35 satisfies also a requirement of 0.3B ≤ A ≤ 0.7B.

In the ceramic filter 1 of the present embodiment, as shown in FIGS. 1(a) to 1(c), the cross section shapes of the first specific main flow passages 3a are the heptagonal shapes arranged so that the reference sides 31 facing each other via the specific partition wall part 18 constitute two parallel lines. Therefore, there are provided the filtration membranes 5 having uniform membrane thicknesses even in corner portions of the inner wall surfaces of the first specific main flow passages 3a, and this remarkably effectively reduces a generation ratio of defects such as cracks generated in forming the filtration membranes by firing or the like. Since the generation ratio of the defects is remarkably small, a manufacturing yield can be increased, and the ceramic filter 1 has a high product reliability.

In the ceramic filter 1 of the present embodiment, as shown in FIG. 1(c), θ₁, θ₂, θ₃, and θ₄ are in the range of 110 to 160°, and A and B satisfy the requirement of 0.3B ≤ A ≤ 0.7B. It is to be noted that from viewpoints that the generations of the defects like the cracks are inhibited in the filtration membranes 5 (see FIG. 1(b)) and that the yield of the ceramic filter 1 (see FIG. 1(a)) is further increased, θ₁, θ₂, θ₃, and θ₄ are preferably in a range of 120 to 150°, further preferably in a range of 130 to 140°. From similar viewpoints, A and B preferably satisfy a requirement of 0.35B ≤ A ≤ 0.65B, further preferably satisfy a requirement of 0.4B ≤ A ≤ 0.6B.

Moreover, as shown in FIGS. 1(a) to 1(c), preferably in the ceramic filter 1 of the present embodiment, the specific partition wall part 18 is provided with the row of second specific main flow passages 3b whose opening portions in opposite end surfaces are plugged by the plugging portions 7, and the slit-like auxiliary flow passages 9 are formed in portions including the outer peripheral surface 6 of the porous body 2 so that the second specific main flow passages 3b communicate with the external space. The ceramic filter 1 of the present embodiment provided with the predetermined auxiliary flow passages 9 is preferable because it is easy to recover the purified fluid from the main flow passages 3 in the vicinity of a central part of the porous body 2, and it is possible to enhance a filtering process ability of the ceramic filter 1 rapidly ten or more times. The ceramic filter 1 is also preferable because it is possible to largely improve a flow rate distribution in the filter, and a counter flow washing pressure distribution at a counter flow washing time. It is to be noted that the "rows of first specific main flow passages disposed in the vicinity of each other" in the present specification include a case where the rows of first specific main flow passages are provided adjacent to each other without interposing another row of main flow passages or the like therebetween. Additionally, it is assumed that the "rows of first specific main flow passages disposed in the vicinity of each other" also include a case where the row of second specific main flow passages is formed in the specific partition wall part positioned between the rows of first specific main flow passages as shown in FIGS. 1(a) to 1(c). The "case where the row of the second specific main flow passages is formed in the specific partition wall part" mentioned in the present specification refers to a case where the row of second specific main flow passages 3b is formed in parallel with the other main flow passages in the specific partition wall part 18 as shown in FIG. 1(b). Therefore, in the present specification, even when the row of second specific main flow passages 3b is formed in the specific partition wall part 18, a part positioned between two parallel lines 12 is referred to as the "specific partition wall part".

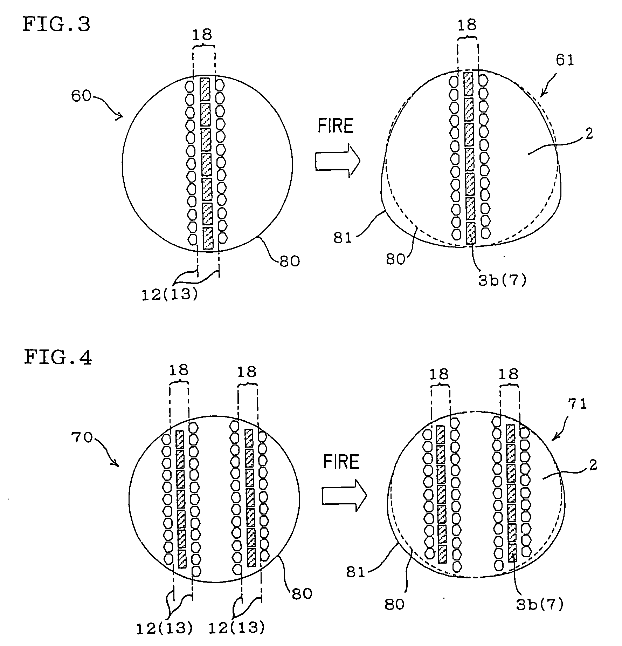

In the present embodiment, as shown in FIG. 3, a ceramic filter 61 may be provided with at least one parallel line pair 13 each constituted of two parallel lines 12. Furthermore, as shown in FIG. 4, in the present embodiment, a ceramic filter 71 has two or more parallel line pairs 13 each constituted of two parallel lines 12. This is preferable because the specific partition wall parts 18, which contribute to retention of a shape of a non-fired body 70, can be arranged at appropriate intervals, and it is possible to inhibit distortion or deformation of the porous body 2 at a firing time, and that of the ceramic filter 71 more effectively. It is to be noted that in FIGS. 3 and 4, reference numerals 60, 70 denote non-fired bodies, reference numeral 80 denotes a contour line of the non-fired body, and reference numeral 81 denotes a contour line of a ceramic filter (fired body). Here, when two or more parallel line pairs 13 are disposed, an effect of inhibiting the distortion or the deformation of the ceramic filter 71 is more effectively produced in a case where a maximum diameter of the cross section of the porous body 2 perpendicular to the flow direction of the fluid to be purified is preferably 70 mmφ or more, further preferably 120 mmφ or more. There is not any special limitation as to an upper limit value of the maximum diameter, and the value is 300 mmφ or less from a viewpoint of substantial manufacturability of the porous body or the like.

It is to be noted that the "maximum diameter of the cross section perpendicular to the flow direction of the fluid to be purified or the purified fluid" mentioned in the present specification refers to the diameter (maximum diameter) of the cross section, having a maximum value, among the cross sections (arbitrary cross sections formed along the flow passages) of the porous body perpendicular to the flow direction of the fluid to be purified or the purified fluid. The diameter refers to a diameter of a circle in a case where a cross section shape is circular, a length of a long axis in a case where the cross section shape is elliptical or oblong, a length of a longest diagonal line in a case where the cross section shape is polygonal, or a longest distance between two points taken on an outer periphery of a cross section shape in a case where the cross section shape is amorphous.

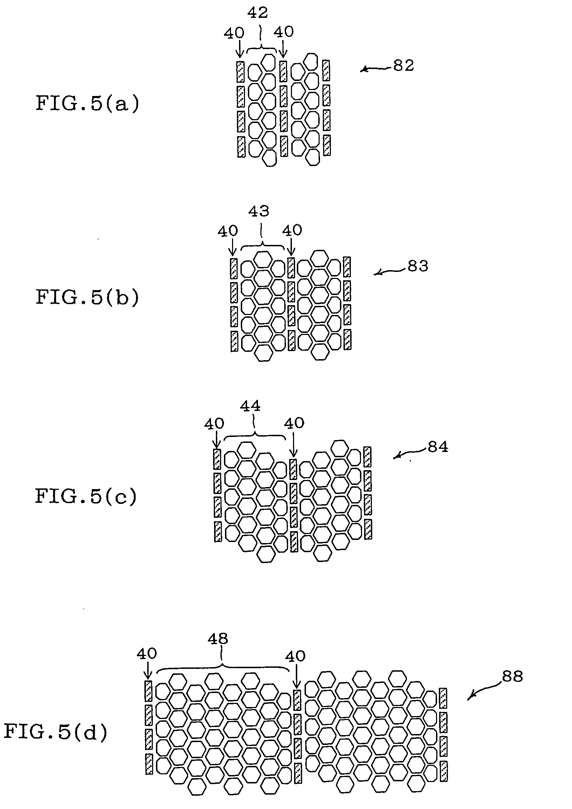

FIGS. 5(a) to 5(d) are enlarged views showing the arrangement pattern (repeated pattern) of the cross section shape of the ceramic filter of the present invention, perpendicular to the flow direction of the fluid to be purified or the purified fluid. As shown in FIGS. 5(a) to 5(d), in the present embodiment, each of ceramic filters 82, 83, 84, 88 preferably has a repeated pattern of an arrangement pattern of the cross section shapes perpendicular to the flow direction of the fluid to be purified or the purified fluid in a row 40 of second specific main flow passages, and rows 42, 43, 44, or 48 of main flow passages other than the second specific main flow passages. Following one row 40 of second specific main flow passages, there are arranged two to eight rows 42, 43, 44, or 48 of main flow passages other than the second specific main flow passages. When the arrangement pattern of the cross section shapes perpendicular to the flow direction of the fluid to be purified or the purified fluid is constituted as such predetermined repeated pattern, there are produced effects that the generation ratios of the defects of the filtration membranes are reduced. Moreover, the filtering efficiency of the fluid to be purified is remarkably high. Furthermore, the generations of the disadvantages of the distortions or the deformations at the firing time are reduced, and the manufacturing yield is satisfactory.

As to the arrangement pattern of the cross section shapes perpendicular to the flow direction of the fluid to be purified or the purified fluid, the pattern may be generally judged and set from the viewpoint of the filtering efficiency of the fluid to be purified or avoidance of the generation of the disadvantage like the distortion or the deformation at the firing time. For example, from the viewpoint of the filtering efficiency of the fluid to be purified, even for the ceramic filter having an equal diameter, the arrangement pattern is appropriately selected and set by a size of a pore diameter of the produced filtration membrane. That is, when the filtration membrane has a large pore diameter, a fluctuation is easily generated in a water passing amount distribution (filtered water amounts) of the main flow passages other than the second specific main flow passages. Therefore, the arrangement pattern of the second-first specific main flow passages may be set to a repeated pattern of one row-two rows or one row-three rows. On the other hand, when the filtration membrane has a small pore diameter, the fluctuation is not easily generated in the water passing amount distribution (filtered water amounts) of the main flow passages other than the second specific main flow passages. Therefore, a repeated pattern of one row-seven rows or one row-eight rows may be selected. When there is a large difference of the water passing amount between a central part and an outer peripheral part of the cross section shape, the arrangement pattern of the first specific main flow passages-second specific main flow passages-first specific main flow passages-second specific main flow passages ... is preferably set to an arrangement pattern of two rows-one row-three rows-one row-two rows, five rows-one row-eight rows-one row-five rows or the like.

From the viewpoint of the avoidance of the generation of the disadvantage of the distortion or the deformation at the firing time, when the diameter of the ceramic filter increases, there is a tendency that the deformation at a drying time or the firing time easily increases. Therefore, when the number of the rows (partition walls) of the second specific main flow passages is increased, the deformation is not easily generated. However, when the number of the second specific main flow passages is increased, an area of the filtration membrane decreases accordingly. Therefore, the number of the second specific main flow passages is reduced as much as possible, and the filter is preferably designed so that the filter is not easily deformed, and a sufficient water passing amount distribution can be achieved.

There is not any special limitation as to the cross section shape of the porous body which is a substrate of the ceramic filter of the present invention, and a circular shape, a square shape, a rectangular shape, a hexagonal shape or the like is usable. Additionally, the cross section shape is preferably circular in that the porous body is easily extruded, firing deformation is little, and the body is easily plugged with respect to a housing. The porous body is made of a ceramic superior in physical strength, durability, and resistance to corrosion, but there is not any special limitation as to a type of the ceramic. The type may be selected from various ceramic materials such as alumina, titania, mullite, zirconia, cordierite, and a mixture or the like of them in accordance with the resistance to corrosion against the fluid to be purified or the like, ease of manufacturing, cost, purpose or the like.

To manufacture the porous body, first, in addition to an aggregate and a sintering assistant, a dispersion medium and an organic binder are added. If necessary, a surfactant, a plasticizer or the like is added, and clay obtained by kneading the materials is extruded to obtain a formed material. The aggregate may be selected from the above-described ceramic materials. When the clay containing the aggregate is formed and fired, the porous body is formed in such a manner that the body has pores of sizes corresponding to particle diameters of the aggregate. The sintering assistant is an additive for strengthening bonding between the aggregates. When the additive is added to the clay together with the aggregate constituted of ceramic particles whose mean particle diameter is less than 5 µm, the bonding between the aggregates is strengthened, and a solid porous body is formed. There is not any special limitation as to a material of the sintering assistant, and, for example, alumina, silica, zirconia, titania, glass frit, feldspar, cordierite or the like can be used. Usually, about 10 to 35 mass% of the assistant may be added with respect to a total mass of the aggregate and the sintering assistant in order to secure the bonding strength between the aggregates, and prevent the pores of the porous body from being blocked. The extruded formed material is dried, cut into a predetermined length perpendicular to the flow direction, and thereafter fired so that the porous body can be obtained.

There is not any special limitation as to the size of the porous body. For example, in general, an outer diameter is 30 mmφ or more in a case where a total length in the flow direction is about 150 to 2000 mm, and the porous body is columnar. In the present invention, the porous body is preferably large-sized to such an extent that the body needs to be horizontally laid and fired. Specifically, the outer diameter is preferably 70 mmφ, and the total length is 500 mm or more.

The porous body is formed such that the plurality of main flow passages penetrate from one end surface to the other end surface and are partitioned from one another via the partition walls. In the present invention, the respective main flow passages are not formed (arranged) at random, and a plurality of main flow passage rows are formed in such a manner as to juxtapose a plurality of main flow passages. As to pore diameters of the main flow passages, the pore diameters suitable for properties (solid content concentration, ratio of the solid content, viscosity, etc.) of the fluid to be purified may be selected from viewpoints of securing of the filtering area per unit volume, ease of peeling a deposit at a counter flow washing time, reduction of a resistance to permeation of the filtered fluid in the porous body or the like. For example, when the porous body is used in filtering supply water, the pore diameters are preferably about 1 to 5 mm. To secure the strength of the porous body, void volumes of all of the main flow passages are preferably 80% or less of a porous body volume. It is to be noted that the pore diameters of the main flow passages mentioned in the present invention refer to the maximum pore diameter of the main flow passage in the cross section shape perpendicular to the flow direction of the fluid to be purified or the purified fluid.

In the ceramic filter of the present invention, the filtration membranes are thin membranes having pore diameters of several tens of micrometers (µm) or less, and the membranes are made of a ceramic in the same manner as in the porous body. As to the filtration membranes, produced membrane layers having predetermined membrane thicknesses are formed using slurry containing aggregate particles made of the ceramic on the inner wall surfaces of the main flow passages of the porous body. Thereafter, the layers are fired, and can be arranged (provided) on the inner wall surfaces of the main flow passages. Specifically, the aggregate particles are dispersed in a dispersion medium such as water, the organic binder, a pH regulator, the surfactant and the like are added, if necessary, to thereby prepare the slurry for membrane production. By use of a conventional known method such as a dipping membrane production method, or a filtration membrane production method described in JP-A-63-66566, the produced membrane layers are provided on the inner wall surfaces of the main flow passages, and are dried. Thereafter, the layers may be fired at a high temperature of about 1300°C.

There is not any special limitation as to a type of the ceramic of the aggregate particles, and, for example, alumina, titania, mullite, zirconia, silica, spinnel, a mixture or the like of them or the like may be used. Additionally, it is preferable to use a material (e.g., alumina, etc.) whose raw material having controlled particle diameters is easily available and which can form stable produced membrane layers and which has a high resistance to corrosion. The pore diameters of the filtration membranes can be controlled by the particle diameters of the aggregate particles. It is to be noted that the filtration membrane may be preferably formed into at least one layer, and two or more layers may be formed.

As to the slit-like auxiliary flow passages, as shown in FIGS. 1(a), and 1(b), prior to or after the calcination of the porous body 2, the body may be ruptured by a cutting tool such as a diamond electrodeposition cutter so that the rows of second specific main flow passages 3b, in which the auxiliary flow passages 9 are to be formed, communicate with the external space. Here, as to the second specific main flow passages 3b communicating with the auxiliary flow passages 9, opening portions of opposite end surfaces of the porous body 2 are plugged by plugging members or the like to provide the plugged portions 7 in order to prevent mixture of the fluid to be purified into the purified fluid. It is to be noted that the above-described filtration membranes may be arranged on inner wall surfaces of the second specific main flow passages 3b if necessary.

### Examples

The present invention will be described hereinafter more specifically in accordance with examples, but the present invention is not limited to these examples.

### (Example 1)

As an aggregate, alumina, sieved in such a manner as to have particle diameters of 30 to 100 µm, was used. To this aggregate, feldspar having particle diameters of 0.5 to 5 µm was added as a sintering assistant, water was added as a dispersion medium, and methyl cellulose was added as an organic binder. A kneaded and obtained clay was extruded to obtain a honeycomb-like formed material having a plurality of main flow passages. This formed material was dried, thereafter cut into a predetermined length perpendicular to a flow direction, and fired to obtain a honeycomb-like porous body having an outer diameter of 180 mm, a flow passage inner diameter of 2.5 mm, a length of 1000 mm, and about 2200 main flow passages in total, provided with 61 main flow passage rows each having 53 main flow passages at maximum. It is to be noted that porosity of the porous body, measured by a JIS immersion process, was 40%, and a mean pore diameter measured by mercury porosimetry was 20 µm.

Next, by use of a diamond electrodeposition cutter, slit-like auxiliary flow passages were formed every six rows in a central part of the porous body in the flow direction. A width of each exit of the auxiliary flow passage was set to 1.2 mm, and edge portions of the outlets of the auxiliary flow passages were worked into R-shapes. Thereafter, when drying and firing were performed, the porous body having the auxiliary flow passages was manufactured.

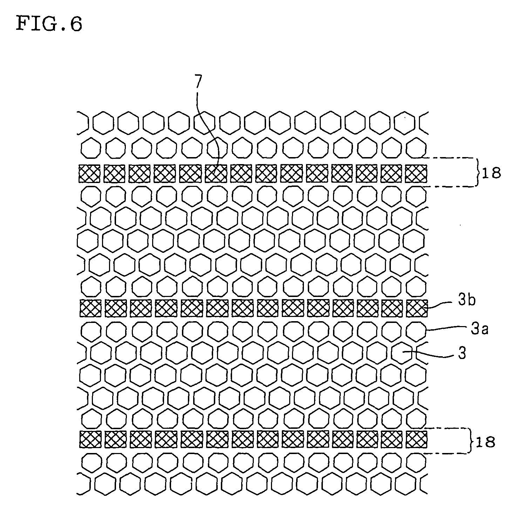

Subsequently, after filling with vitreous plugging members opening portions of opposite end surfaces of second specific main flow passages 3b (see FIG. 6) communicating with the auxiliary flow passages, the body was fired to provide plugging portions 7, and the porous body was manufactured which had an arrangement pattern of main flow passages 3 having cross section shapes shown in FIG. 6. Furthermore, filtration membranes, each having a membrane thickness of 10 µm and made of alumina, were arranged on inner wall surfaces of the main flow passages other than the second specific main flow passages 3b, and a ceramic filter was manufactured (Example 1). It is to be noted that in the ceramic filter of Example 1, the second specific main flow passage 3b has a rectangular shape having a width of 2.5 mm and a height of 2 mm. A first specific main flow passage 3a has a heptagonal shape having θ₁ = 135°, θ₂ = 135°, θ₃ = 135°, θ₄ = 135°, A = 1.4 mm, and B = 2.8 mm. Each of the main flow passages 3 other than the specific main flow passages has a hexagonal shape each of whose opposite sides has a size of 2.5 mm. The first specific main flow passages 3a are arranged in parallel with the second specific main flow passages 3b in a height direction.

### (Comparative Example 1)

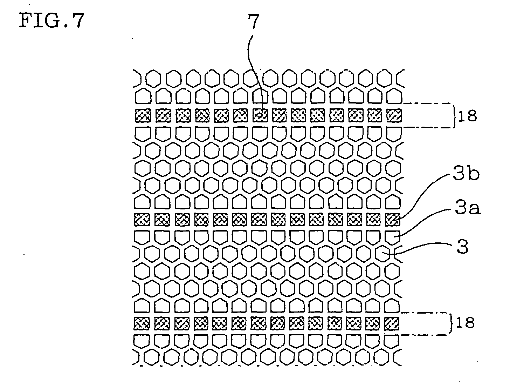

A ceramic filter was manufactured by an operation similar to that of Example 1 described above except that an arrangement pattern of cross section shapes of main flow passages was an arrangement pattern shown in FIG. 7 (Comparative Example 1). It is to be noted that in the ceramic filter of Comparative Example 1, a second specific main flow passage 3b has a rectangular shape having a width of 2.5 mm and a height of 2 mm. A first specific main flow passage 3a has a home-base-like pentagonal shape having a width of 2.5 mm and a maximum height of 2.4 mm. Each of main flow passages 3 other than these specific main flow passages has a hexagonal shape having opposite sides each having a size of 2.5 mm. The first specific main flow passages 3a are arranged in parallel with the second specific main flow passages 3b in a height direction.

### (Investigation of Defects (Measurement of Defect Ratio))

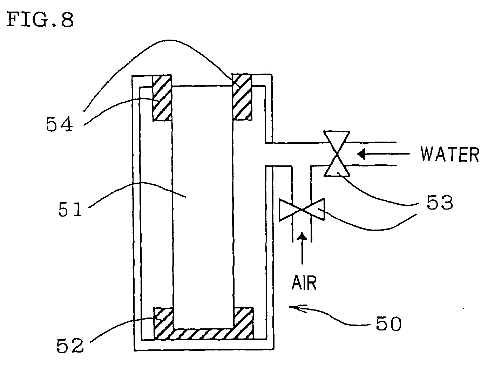

By use of a high-pressure air bubble tester 50 shown in FIG. 8, defects in a ceramic filter 51 were checked by an air bubble process. Specifically, after disposing the ceramic filters 51 (n = 60 (where "n" denotes the number of samples)) of Example 1 and Comparative Example 1 in the high-pressure air bubble tester 50, the filters were wetted with a liquid, pressurizing air was fed into the tester while gradually raising pressures with respect to the filter, and pore diameters were calculated from a pressure at which foaming was caused from pores. In this method, main flow passages, in which the foaming was caused at a ratio of 5 µm or more in terms of a pore diameter, were judged as defective main flow passages. In a case where even one defective main flow passage was generated, the ceramic filter 51 was regarded as defective, the filters were counted, and a defect ratio was measured. It is to be noted that, in FIG. 8, reference numeral 52 denotes a packing, 53 denotes a valve, and 54 denotes an O-ring.

**(Table 1)**

| | Number of defects (defects, n = 60) | Defect ratio (%) |
|---|---|---|
| Example 1 | 2 | 3.3 |
| Comparative Example 1 | 11 | 18.3 |

It is seen from results shown in Table 1 that a value of the defect ratio of the ceramic filter of Example 1 is smaller than that of the ceramic filter of Comparative Example 1. It is to be noted that as to configurations of defects generated in Comparative Example 1, cracks were generated mainly in membranes at right-angled portions of the main flow passages. This is supposedly because, in the right-angled portions, there were generated portions where membranes were produced to be locally thick without producing any filtration membrane having a uniform membrane thickness, and the cracks were generated in the portions at a firing time. Therefore, superior characteristics of the ceramic filter of the present invention could be confirmed.

### Industrial Applicability

In a ceramic filter of the present invention, cross section shapes of a plurality of main flow passages, perpendicular to a flow direction of a fluid to be purified or a purified fluid, are aligned in rows with a predetermined pattern. A cross section shape of a specific partition wall part positioned between rows of first specific main flow passages, perpendicular to the flow direction of the fluid to be purified or the purified fluid, is a predetermined shape. Cross section shapes of the first specific main flow passage, perpendicular to the flow direction of the fluid to be purified or the purified fluid, are polygonal shapes equivalent or superior to heptagonal shapes, which are arranged in a predetermined state in such a manner as to satisfy a predetermined relation. Therefore, in the ceramic filter, a yield is increased without generating defects such as cracks in filtration membranes. Therefore, the filter is useful as a filter or the like, for example, for solid-liquid separation.

## Claims

1. A ceramic filter comprising: a porous body having two end surfaces and an outer peripheral surface and having a plurality of main flow passages for a fluid to be purified which penetrate from one end surface to other end surface and which are partitioned from one another via partition walls; and filtration membranes provided on inner wall surfaces of the main flow passages,
the fluid to be purified that flows into the filter from opening portions in one end surface of the main flow passage being allowed to permeate the filtration membranes and an inside of the porous body to be thereby purified, the fluid being then taken out as a purified fluid from the outer peripheral surface of the porous body, or
the fluid to be purified that flows into the filter from the outer peripheral surface of the porous body being allowed to permeate the inside of the porous body and the filtration membranes to be thereby purified, the fluid being then taken out as a purified fluid from at least opening portions in one end surface of the main flow passage,
wherein cross section shapes of the plurality of main flow passages, in a direction perpendicular to a flow direction of the fluid to be purified or the purified fluid, are aligned in rows with a predetermined pattern,
a specific partition wall part, among the partition walls, is positioned between the rows of predetermined main flow passages (first specific main flow passages) disposed in the vicinity of each other, the cross section shape of the specific partition wall part, in the direction perpendicular to the flow direction of the fluid to be purified or the purified fluid, is so formed as to be encompassed by a shape defined by two parallel lines apart at a specified distance from each other,
the cross section shapes of the first specific main flow passages, in the direction perpendicular to the flow direction of the fluid to be purified or the purified fluid, are formed into polygonal shapes equivalent or superior to heptagonal shapes arranged so that predetermined sides (reference sides) facing each other via the specific partition wall part constitute the two parallel lines, and
assuming that sides crossing opposite ends of the reference side are second and third sides, a side crossing an end of the second side opposite to the reference side is a fourth side, and a side crossing an end of the third side opposite to the reference side is a fifth side, θ₁, θ₂, θ₃, and θ₄ (wherein the θ₁, θ₂, θ₃, and θ₄ indicate an angle (θ₁) formed by the reference side and the second side, an angle (θ₂) formed by the reference side and the third side, an angle (θ₃) formed by the second and fourth sides, and an angle (θ₄) formed by the third and fifth sides, respectively) are within a range of 110 to 160°, and a length (A) of the reference side and a maximum distance (B) between the fourth and fifth sides satisfy a requirement of 0.3B ≤ A ≤ 0.7B.

2. The ceramic filter according to claim 1, having: two or more sets of parallel lines each set comprising two parallel lines.

3. The ceramic filter according to claim 1 or 2, wherein the cross section of the porous body, in the direction perpendicular to the flow direction of the fluid to be purified or the purified fluid, has a maximum diameter of 70 mmφ or more.

4. The ceramic filter according to any one of claims 1 to 3, wherein the specific partition wall part is provided with rows of predetermined main flow passages (second specific main flow passages) whose opposite end-surface openings are plugged, slit-like auxiliary flow passages are formed in portions including the outer peripheral surface of the porous body so that the second specific main flow passages communicate with an external space,
the fluid to be purified that flows into the filter from the opening portions in the one end surface of the main flow passage is allowed to permeate the filtration membranes and the inside of the porous body to be thereby purified, and the fluid is taken out as the purified fluid from the outer peripheral surface of the porous body and outlets of the auxiliary flow passages, or
the fluid to be purified that flows into the filter from the outer peripheral surface of the porous body and the outlets of the auxiliary flow passages is allowed to permeate the inside of the porous body and the filtration membranes to be thereby purified, and the fluid is taken out as the purified fluid from at least the opening portions in the one end surface of the main flow passage.

5. The ceramic filter according to claim 4, wherein an arrangement pattern of cross section shapes of the rows of second specific main flow passages and the rows of main flow passages other than the second specific main flow passages, in the direction perpendicular to the flow direction of the fluid to be purified or the purified fluid, is a repeated pattern including two to eight rows of main flow passages other than the second specific main flow passages, which are arranged subsequently to one row of second specific main flow passages.
